# FASCICULE DE BREVET EUROPEEN

(11) **EP 3 840 122 B1**
(45) Date de publication et mention de la délivrance du brevet: **18.09.2024**
(21) Numéro de dépôt: 20213638.8
(22) Date de dépôt: 13.12.2020
(51) Int. Cl.: H01Q 3/46, H01Q 15/02, H01Q 21/00, H01Q 21/06

(54) **CELLULE ÉLÉMENTAIRE D'UN RÉSEAU TRANSMETTEUR**
ELEMENTARZELLE EINES GRUPPENSTRAHLERS
ELEMENTARY CELL OF A TRANSMITTER ARRAY

(30) Priorité: 18.12.2019 FR 1914716
(43) Date de publication de la demande: 23.06.2021
(73) Titulaire: Commissariat à l'Energie Atomique et aux Energies Alternatives, 75015 Paris (FR)
(72) Inventeur: CLEMENTE, Antonio, 38054 Grenoble cedex 09 (FR)
(74) Mandataire: INNOV-GROUP

(56) Documents cités:
- EP-A2- 2 070 158
- EP-B1- 2 070 158
- US-A1- 2007 001 918
- US-A1- 2013 271 346
- ANTONIO CLEMENTE ET AL: "Design of a reconfigurable transmit-array at X-band frequencies", ANTENNA TECHNOLOGY AND APPLIED ELECTROMAGNETICS (ANTEM), 2012 15TH INTERNATIONAL SYMPOSIUM ON, IEEE, 25 June 2012 (2012-06-25), pages 1 - 4, XP032219584, ISBN: 978-1-4673-0290-6, DOI: 10.1109/ANTEM.2012.6262295

## Description

### Domaine technique

L'invention se rapporte au domaine technique des antennes à réseau transmetteur (« *Transmitarray antenna*» en langue anglaise). Une antenne à réseau transmetteur comporte :
- un réseau transmetteur (appelé également lentille électromagnétique), comprenant un ensemble de cellules élémentaires pouvant être disposé sous forme matricielle (la matrice peut être régulière ou éparse ; la matrice régulière peut par exemple comporter un maillage carré ou triangulaire) ;
- au moins une source rayonnante (dite source primaire), agencée pour illuminer le réseau transmetteur.

Chaque cellule élémentaire du réseau transmetteur est susceptible d'introduire un déphasage à une onde incidente émise par la ou les sources primaires afin de compenser chaque différence de trajet du rayonnement émis entre la ou les sources primaires et le réseau transmetteur. Plus précisément, chaque cellule élémentaire du réseau transmetteur peut comporter :
- une première antenne (dite de réception), agencée pour recevoir l'onde incidente émise par la ou les sources primaires ;
- une deuxième antenne (dite de transmission), agencée pour transmettre avec un déphasage l'onde incidente reçue par la première antenne.

D'autres architectures de cellules élémentaires peuvent être utilisées, telles que des structures multicouches basées sur le concept des surfaces sélectives en fréquence, ou sur le concept des cavités Fabry-Pérot. Les éléments rayonnants de type dipôles, fentes etc. peuvent être aussi utilisés au niveau de la cellule élémentaire.

Il est à noter qu'une cellule élémentaire d'un réseau transmetteur peut fonctionner en réception ou en transmission, c'est-à-dire que la première antenne de la cellule élémentaire peut également être une antenne de transmission, tandis que la deuxième antenne de la cellule élémentaire peut également être une antenne de réception.

L'invention trouve notamment son application dans l'obtention d'une antenne reconfigurable. Par « reconfigurable », on entend qu'au moins une caractéristique de l'antenne peut être modifiée au cours de sa durée de vie, après sa fabrication. La ou les caractéristiques généralement modifiables sont la réponse fréquentielle (en amplitude et en phase), le diagramme de rayonnement (appelé également faisceau), et la polarisation. La reconfiguration de la réponse fréquentielle couvre différentes fonctionnalités telles que la commutation de fréquences, l'accord en fréquence, la variation de bande passante, le déphasage, le filtrage fréquentiel etc. La reconfiguration du diagramme de rayonnement couvre différentes fonctionnalités telles que le balayage angulaire de la direction de pointage du faisceau (appelé également dépointage), l'ouverture du faisceau typiquement défini à mi-puissance (c'est-à-dire la concentration du rayonnement suivant une direction particulière), le filtrage spatial (lié à l'ouverture et à la formation du faisceau), la formation d'un faisceau ou de multifaisceaux (e.g. plusieurs faisceaux étroits remplaçant un faisceau large) etc. Une antenne reconfigurable à réseau transmetteur est particulièrement avantageuse à partir de la bande C (4-8 GHz) jusqu'à la bande W (75-110 GHz), voire la bande D (110-170 GHz) ou jusqu'à la bande 300 GHz, pour les applications suivantes :
- radars automobiles d'assistance et d'aide à la conduite, dans une perspective de sécurité active,
- systèmes d'imagerie et de surveillance à très haute résolution,
- systèmes de communication à très haut débit, fonctionnant notamment dans les bandes millimétriques (communications inter-bâtiments ou intra-bâtiment en environnement domotique ou immotique, et particulièrement adaptées au suivi d'utilisateurs),
- liaisons de télémesure sol-satellite en orbite basse LEO (pour « *Low Earth Orbit*» en langue anglaise) en bande Ka, télécommunications par satellite avec source primaire reconfigurable (SOTM^{™} pour « *Satcom-on-the-Move*» en langue anglaise, internet, télévision etc...),
- systèmes de liaison point-à-point et point-à-multipoint (réseaux métropolitains, systèmes « *Frouthaul*» et « *Backbaul*» pour les réseaux cellulaires, accès radio pour les réseaux mobiles de cinquième génération etc.).

L'invention trouve également son application dans le multiplexage de deux signaux provenant de deux sources primaires illuminant le réseau transmetteur, ou encore dans le démultiplexage d'un signal composite provenant d'une source primaire illuminant le réseau transmetteur.

### État de l'art

Une cellule élémentaire d'un réseau transmetteur pour une antenne reconfigurable, connue de l'état de la technique, notamment du document WO 2012/085067, comporte :
- une antenne de réception, planaire, destinée à recevoir une onde incidente ;
- une antenne de transmission, planaire, destinée à transmettre l'onde incidente avec un déphasage, et comprenant des première et deuxième surfaces de rayonnement disjointes ;
- un circuit de déphasage, configuré pour définir un couple d'états de phase pour l'onde incidente ; le circuit de déphasage comprenant des premier et second commutateurs présentant respectivement un état passant et un état bloqué, en alternance ; les états passant ou bloqué correspondant à une circulation d'un courant, respectivement autorisée ou bloquée, entre les première et deuxième surfaces de rayonnement disjointes de l'antenne de transmission.

Une telle cellule élémentaire de l'état de la technique génère deux états de phase pour la transmission de l'onde incidente. Les deux états de phase sont séparés de 180° dans la mesure où les premier et second commutateurs, présentant respectivement un état passant et un état bloqué et commandés en alternance, excitent l'antenne de transmission en phase ou en opposition de phase avec l'antenne de réception. En d'autres termes, la phase de transmission est contrôlée avec une quantification de 1 bit, c'est-à-dire deux états de phase à 0° ou 180°.

Une telle cellule élémentaire de l'état de la technique n'est pas entièrement satisfaisante dans la mesure où elle opère dans une bande passante donnée, et ne peut donc générer correctement deux états de phase pour deux ondes incidentes provenant de deux sources primaires opérant dans deux bandes passantes différentes, avec éventuellement des états de polarisation différents.

En outre, pour une bande passante donnée, une telle cellule élémentaire ne peut traiter le multiplexage de deux signaux provenant de deux sources primaires irradiant le réseau transmetteur, ou encore le démultiplexage d'un signal composite provenant d'une source primaire irradiant le réseau transmetteur.

US 2007/001918 A1 divulgue une cellule élémentaire d'un réseau transmetteur avec deux antennes planaires et deux trous d'interconnexion reliés entre eux par une ligne à retard de phase.

US 2013/271346 A1 divulgue une cellule élémentaire d'un réseau transmetteur avec deux antennes planaires.

EP 2 070 158 A2 divulgue une lentille du réseau primaire comprenant un premier ensemble d'éléments radiateurs et un deuxième ensemble d'éléments radiateurs pour une première bande de fréquence et un troisième ensemble d'éléments radiateurs et un quatrième ensemble d'éléments radiateurs pour une deuxième bande de fréquences.

### Exposé de l'invention

L'invention vise à remédier en tout ou partie aux inconvénients précités. A cet effet, l'invention a pour objet une cellule élémentaire d'un réseau transmetteur pour transmettre une onde incidente avec un déphasage, la cellule élémentaire comportant :
- un plan de masse ;
- des premier et deuxième substrats diélectriques, agencés de part et d'autre du plan de masse, et présentant chacun une première surface, orientée vers le plan de masse, et une seconde surface opposée à la première surface ;
- des première et deuxième antennes planaires, s'étendant respectivement à la seconde surface des premier et deuxième substrats diélectriques ;
- un trou d'interconnexion, agencé pour traverser les premier et deuxième substrats diélectriques de manière à connecter électriquement les première et deuxième antennes planaires ; le trou d'interconnexion étant électriquement isolé du plan de masse ;
la cellule élémentaire étant remarquable en ce qu'elle comporte une troisième antenne planaire, s'étendant entre le plan de masse et la première surface du premier substrat diélectrique, et connectée électriquement au trou d'interconnexion.

### Définitions

- Par « plan de masse », on entend une surface électriquement conductrice, de préférence métallique, formant un plan de masse électrique de manière à définir un potentiel de référence.
- Par « diélectrique », on entend que le substrat présente une conductivité électrique à 300 K inférieure à 10⁻⁸ S/cm.
- Par « antenne planaire », on entend une surface plane électriquement conductrice (classiquement métallique) pouvant émettre/recevoir un rayonnement électromagnétique. Un exemple d'antenne planaire est la pastille micro-ruban (« *patch* » en langue anglaise).
- Par « trou d'interconnexion » (« *via*» en langue anglaise), on entend un trou métallisé permettant d'établir une liaison électrique entre différents niveaux d'interconnexion.
- Par « s'étendant entre », on entend que la troisième antenne planaire se situe dans un espace délimité par le plan de masse et la première surface du premier substrat diélectrique, la troisième antenne planaire pouvant être éventuellement en contact avec la première surface du premier substrat diélectrique.

Ainsi, une telle cellule élémentaire selon l'invention autorise, grâce à la présence de la troisième antenne planaire, le multiplexage de deux signaux provenant de deux sources primaires irradiant le réseau transmetteur, ou encore autorise le démultiplexage d'un signal composite provenant d'une source primaire irradiant le réseau transmetteur.

Le multiplexage de deux signaux provenant de deux sources primaires irradiant le réseau transmetteur est autorisé lorsque les première et troisième antennes planaires sont des antennes de réception agencées pour recevoir les deux signaux, et la deuxième antenne planaire est une antenne de transmission du signal multiplexé.

Le démultiplexage d'un signal composite provenant d'une source primaire irradiant le réseau transmetteur est autorisé lorsque la deuxième antenne planaire est une antenne de réception du signal composite et les première et troisième antennes planaires sont des antennes de transmission des composantes du signal composite.

La cellule élémentaire selon l'invention peut comporter une ou plusieurs des caractéristiques suivantes.

Selon une caractéristique de l'invention, la troisième antenne planaire s'étend à la première surface du premier substrat diélectrique.

Ainsi, un avantage procuré est d'améliorer la compacité de la cellule élémentaire.

Selon une caractéristique de l'invention, les première, deuxième et troisième antennes planaires sont configurées pour opérer dans la même bande passante.

### Définition

Par « configurées », on entend que les dimensions des antennes planaires sont choisies en fonction de la permittivité effective du milieu équivalent dans lequel s'effectue la propagation de l'onde incidente, afin que les antennes planaires opèrent dans une même bande passante donnée.

Ainsi, un avantage procuré est d'améliorer la fiabilité du multiplexage/démultiplexage.

Selon une caractéristique de l'invention, les première et troisième antennes planaires sont orientées suivant deux polarisations linéaires orthogonales.

Ainsi, un avantage procuré est de pouvoir générer deux états de phase séparés de 180° lorsque l'onde incidente irradiée par une source primaire est polarisée linéairement.

Selon une caractéristique de l'invention, les première et troisième antennes planaires sont mobiles en rotation par rapport à la deuxième antenne planaire.

Ainsi, un avantage procuré est de pouvoir générer un ensemble d'états de phase, séparés d'un angle correspondant à l'angle de rotation par rapport à la deuxième antenne planaire, lorsque l'onde incidente irradiée par une source primaire est polarisée circulairement.

Selon une caractéristique de l'invention, la cellule élémentaire comporte une quatrième antenne planaire, s'étendant entre le plan de masse et la première surface du deuxième substrat diélectrique, et connectée électriquement au trou d'interconnexion ; les première et troisième antennes planaires sont configurées pour opérer dans deux bandes passantes différentes ; les deuxième et quatrième antennes planaires sont configurées pour opérer dans lesdites deux bandes passantes différentes.

Autrement dit, les première et troisième antennes planaires sont configurées pour opérer respectivement dans des première et deuxième bandes passantes différentes ; les deuxième et quatrième antennes planaires sont configurées pour opérer respectivement dans les première et deuxième bandes passantes ou respectivement dans les deuxième et première bandes passantes.

### Définitions

- Par « s'étendant entre », on entend que la quatrième antenne planaire se situe dans un espace délimité par le plan de masse et la première surface du deuxième substrat diélectrique, la quatrième antenne planaire pouvant être éventuellement en contact avec la première surface du deuxième substrat diélectrique.
- Par « configurées », on entend que les dimensions des antennes planaires sont choisies en fonction de la permittivité effective du milieu équivalent dans lequel s'effectue la propagation de l'onde incidente, afin que les antennes planaires opèrent dans une bande passante donnée.

Ainsi, un avantage procuré est de pouvoir générer correctement deux états de phase pour deux ondes incidentes provenant de deux sources primaires opérant dans deux bandes passantes différentes, avec éventuellement des états de polarisation différents.

Selon une caractéristique de l'invention, la quatrième antenne planaire s'étend à la première surface du deuxième substrat diélectrique.

Ainsi, un avantage procuré est d'améliorer la compacité de la cellule élémentaire.

Selon une caractéristique de l'invention, la première antenne planaire présente des première et seconde surfaces de rayonnement disjointes ;
la cellule élémentaire comportant un premier circuit de déphasage comprenant :
   - des premier et second commutateurs présentant respectivement un état passant et un état bloqué en alternance, les états passant ou bloqué correspondant à une circulation d'un courant, respectivement autorisée ou bloquée, entre les première et seconde surfaces de rayonnement disjointes de la première antenne planaire,
   - des premières lignes de polarisation, agencées pour polariser les premier et second commutateurs du premier circuit de déphasage ;
les première et troisième antennes planaires étant connectées électriquement aux premières lignes de polarisation, les deuxième et quatrième antennes planaires étant connectées électriquement au plan de masse.

### Définitions

- Par « disjointes», on entend que les première et deuxième surfaces de rayonnement de la première antenne planaire sont séparées entre elles par une zone de séparation de manière à être électriquement isolées.
- Par « en alternance », on entend que le premier commutateur alterne entre l'état passant et l'état bloqué, tandis que, simultanément, le second commutateur alterne entre l'état bloqué et l'état passant. En d'autres termes, à tout instant, les premier et second commutateurs appartenant au premier circuit de déphasage présentent deux états opposés, soit passant/bloqué, soit bloqué/passant. Les états passant/passant ou bloqué/bloqué ne sont pas autorisés.
- Par « ligne de polarisation », on entend une piste réalisée dans un matériau électriquement conducteur. Par « électriquement conducteur », on entend que le matériau présente une conductivité électrique à 300 K supérieure à 10² S/cm.

Ainsi, un avantage procuré est d'obtenir une cellule élémentaire reconfigurable où le contrôle du déphasage par le premier circuit de déphasage est commun sur les deux bandes passantes. En effet, les première et troisième antennes planaires, configurées pour opérer dans deux bandes passantes différentes, sont connectées électriquement aux premières lignes de polarisation du premier circuit de déphasage.

Selon une caractéristique de l'invention, la cellule élémentaire comporte un troisième substrat diélectrique s'étendant entre le plan de masse et la troisième antenne planaire, les premières lignes de polarisation s'étendant sur le troisième substrat diélectrique.

Ainsi, un avantage procuré est d'améliorer la compacité de la cellule élémentaire.

Selon une caractéristique de l'invention, les première et deuxième antennes planaires présentent chacune des première et seconde surfaces de rayonnement disjointes ; la cellule élémentaire comportant :
- un premier circuit de déphasage comprenant :
   des premier et second commutateurs présentant respectivement un état passant et un état bloqué en alternance, les états passant ou bloqué correspondant à une circulation d'un courant, respectivement autorisée ou bloquée, entre les première et seconde surfaces de rayonnement disjointes de la première antenne planaire,
   des premières lignes de polarisation, agencées à la première surface du premier substrat diélectrique pour polariser les premier et second commutateurs du premier circuit de déphasage ; la première antenne planaire étant connectée électriquement aux premières lignes de polarisation ;
- un deuxième circuit de déphasage comprenant :
   des premier et second commutateurs présentant respectivement un état passant et un état bloqué en alternance, les états passant ou bloqué correspondant à une circulation d'un courant, respectivement autorisée ou bloquée, entre les première et seconde surfaces de rayonnement disjointes de la deuxième antenne planaire,
   des deuxièmes lignes de polarisation, agencées à la première surface du deuxième substrat diélectrique pour polariser les premier et second commutateurs du deuxième circuit de déphasage ; la deuxième antenne planaire étant connectée électriquement aux deuxièmes lignes de polarisation ;
   les première et deuxième antennes planaires étant configurées pour opérer dans deux bandes passantes différentes, les troisième et quatrième antennes planaires étant connectées électriquement au plan de masse.

Les première et troisième antennes planaires sont configurées pour opérer respectivement dans des première et deuxième bandes passantes différentes. Les deuxième et quatrième antennes planaires sont configurées pour opérer respectivement dans les deuxième et première bandes passantes de sorte que les première et deuxième antennes planaires sont configurées pour opérer dans deux bandes passantes différentes. En effet, la première antenne planaire est configurée pour opérer dans la première bande passante, tandis que la deuxième antenne planaire est configurée pour opérer dans la deuxième bande passante.

### Définitions

- Par « disjointes», on entend que les première et deuxième surfaces de rayonnement de la première antenne planaire (et de la deuxième antenne planaire) sont séparées entre elles par une zone de séparation de manière à être électriquement isolées.
- Par « en alternance », on entend que le premier commutateur alterne entre l'état passant et l'état bloqué, tandis que, simultanément, le second commutateur appartenant au même circuit de déphasage alterne entre l'état bloqué et l'état passant. En d'autres termes, à tout instant, les premier et second commutateurs appartenant au même circuit de déphasage présentent deux états opposés, soit passant/bloqué, soit bloqué/passant. Les états passant/passant ou bloqué/bloqué ne sont pas autorisés.

Ainsi, un avantage procuré est d'obtenir une cellule élémentaire reconfigurable où le contrôle du déphasage par les premier et deuxième circuits de déphasage est indépendant sur les deux bandes passantes. En effet, les première et deuxième antennes planaires, configurées pour opérer dans deux bandes passantes différentes, sont connectées électriquement respectivement aux premières et deuxièmes lignes polarisation appartenant respectivement aux premier et deuxième circuits de déphasage.

Selon une caractéristique de l'invention, la cellule élémentaire comporte :
- un troisième substrat diélectrique, s'étendant entre le plan de masse et le premier substrat diélectrique, la troisième antenne planaire s'étendant sur le troisième substrat diélectrique ;
- un quatrième substrat diélectrique, comprenant une première surface sur laquelle s'étend le plan de masse, et une seconde surface opposée sur laquelle s'étend la quatrième antenne planaire.

Ainsi, un avantage procuré est d'améliorer la compacité de la cellule élémentaire.

L'invention a également pour objet une antenne reconfigurable à une fréquence de fonctionnement, comportant :
- un réseau transmetteur comprenant un ensemble de cellules élémentaires conformes à l'invention ;
- des première et seconde sources rayonnantes, opérant respectivement dans des première et seconde bandes passantes, et agencées pour illuminer le réseau transmetteur.

### Définition

Par « source rayonnante », on entend tout système (de préférence un système focal) adapté pour émettre des ondes électromagnétiques.

### Brève description des dessins

D'autres caractéristiques et avantages apparaîtront dans l'exposé détaillé de différents modes de réalisation de l'invention, l'exposé étant assorti d'exemples et de références aux dessins joints.

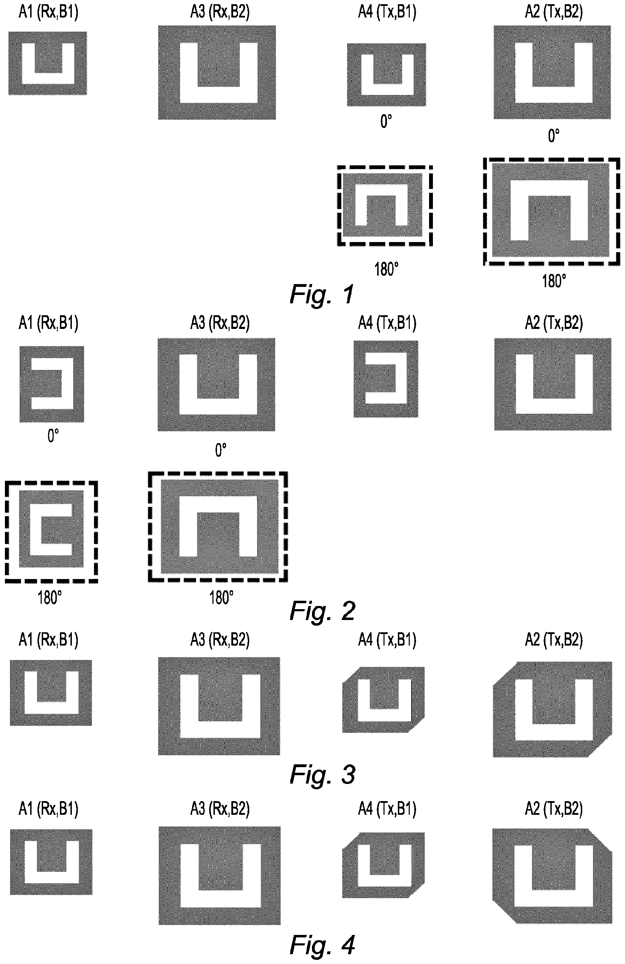

Figure 1 comporte des vues schématiques de dessus de quatre antennes planaires d'une cellule élémentaire selon l'invention, autorisant un seul état de polarisation linéaire pour les deux rayonnements transmis par la cellule élémentaire. Rx désigne une antenne planaire utilisée en réception. Tx désigne une antenne planaire utilisée en transmission. B1 et B2 désignent des première et seconde bandes passantes. Les traits pointillés montrent une rotation de 180° de l'antenne planaire correspondante. A1, A2, A3, A4 désignent respectivement les première, deuxième, troisième et quatrième antennes planaires d'une cellule élémentaire selon l'invention.
Figure 2 comporte des vues schématiques de dessus de quatre antennes planaires d'une cellule élémentaire selon l'invention, autorisant deux états de polarisation linéaires (orthogonaux) pour les deux rayonnements transmis par la cellule élémentaire. Rx désigne une antenne planaire utilisée en réception. Tx désigne une antenne planaire utilisée en transmission. B1 et B2 désignent des première et seconde bandes passantes. Les traits pointillés montrent une rotation de 180° de l'antenne planaire correspondante. A1, A2, A3, A4 désignent respectivement les première, deuxième, troisième et quatrième antennes planaires d'une cellule élémentaire selon l'invention.
Figure 3 comporte des vues schématiques de dessus de quatre antennes planaires d'une cellule élémentaire selon l'invention, autorisant un seul état de polarisation circulaire pour les deux rayonnements transmis par la cellule élémentaire. Rx désigne une antenne planaire utilisée en réception. Tx désigne une antenne planaire utilisée en transmission. B1 et B2 désignent des première et seconde bandes passantes. A1, A2, A3, A4 désignent respectivement les première, deuxième, troisième et quatrième antennes planaires d'une cellule élémentaire selon l'invention.
Figure 4 comporte des vues schématiques de dessus de quatre antennes planaires d'une cellule élémentaire selon l'invention, autorisant deux états de polarisation circulaires (droite et gauche) pour les deux rayonnements transmis par la cellule élémentaire. Rx désigne une antenne planaire utilisée en réception. Tx désigne une antenne planaire utilisée en transmission. B1 et B2 désignent des première et seconde bandes passantes. A1, A2, A3, A4 désignent respectivement les première, deuxième, troisième et quatrième antennes planaires d'une cellule élémentaire selon l'invention.

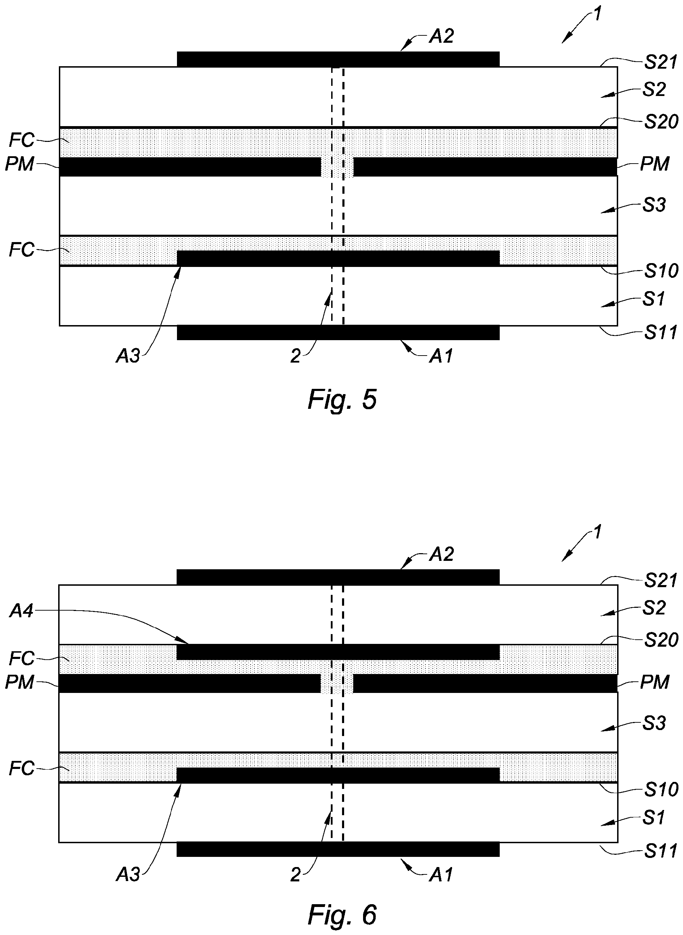

Figure 5 est une vue schématique en coupe d'une cellule élémentaire selon l'invention, illustrant un mode de réalisation où la cellule élémentaire est passive et comporte trois antennes planaires.
Figure 6 est une vue schématique en coupe d'une cellule élémentaire selon l'invention, illustrant un mode de réalisation où la cellule élémentaire est passive et comporte quatre antennes planaires.

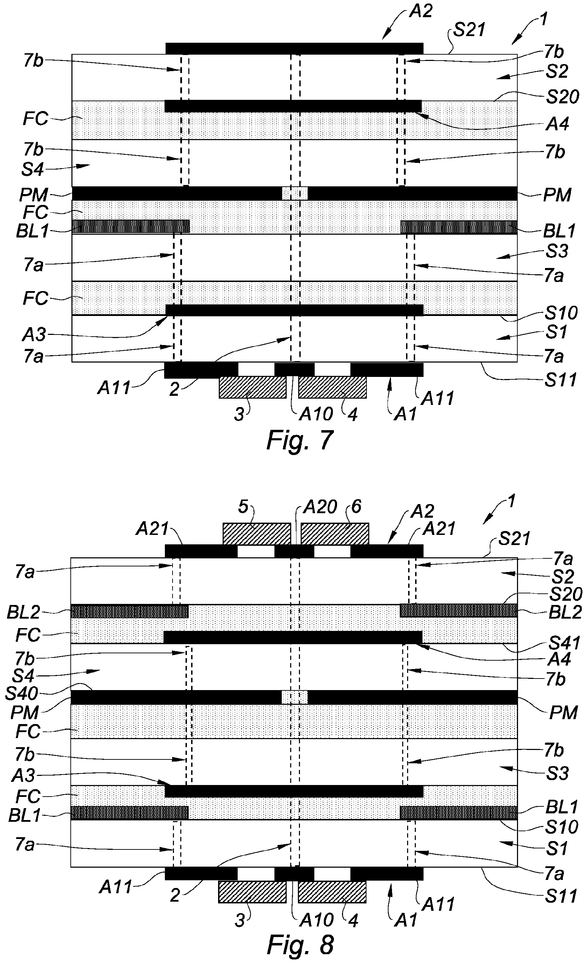

Figure 7 est une vue schématique en coupe d'une cellule élémentaire selon l'invention, illustrant un mode de réalisation où la cellule élémentaire est active avec un contrôle du déphasage commun sur les deux bandes passantes.
Figure 8 est une vue schématique en coupe d'une cellule élémentaire selon l'invention, illustrant un mode de réalisation où la cellule élémentaire est active avec un contrôle du déphasage indépendant sur les deux bandes passantes.

### Exposé détaillé des modes de réalisation

Les éléments identiques ou assurant la même fonction porteront les mêmes références pour les différents modes de réalisation, par souci de simplification.

Un objet de l'invention est une cellule élémentaire 1 d'un réseau transmetteur pour transmettre une onde incidente avec un déphasage, la cellule élémentaire 1 comportant :
- un plan de masse PM ;
- des premier et deuxième substrats diélectriques S1, S2, agencés de part et d'autre du plan de masse PM, et présentant chacun une première surface S10, S20, orientée vers le plan de masse PM, et une seconde surface S11, S21 opposée à la première surface S10, S20 ;
- des première et deuxième antennes planaires A1, A2, s'étendant respectivement à la seconde surface S11, S21 des premier et deuxième substrats diélectriques S1, S2 ;
- un trou d'interconnexion 2 (dit principal), agencé pour traverser les premier et deuxième substrats diélectriques S1, S2 de manière à connecter électriquement les première et deuxième antennes planaires A1, A2 ; le trou d'interconnexion 2 étant électriquement isolé du plan de masse PM ;
la cellule élémentaire 1 étant remarquable en ce qu'elle comporte une troisième antenne planaire A3, s'étendant entre le plan de masse PM et la première surface S10 du premier substrat diélectrique S1, et connectée électriquement au trou d'interconnexion 2.

### Plan de masse

Le plan de masse PM est préférentiellement réalisé dans un matériau métallique, plus préférentiellement le cuivre. A titre d'exemple non limitatif, le plan de masse PM peut présenter une épaisseur de l'ordre de [12-17] µm lorsque la fréquence de fonctionnement de l'antenne à réseau transmetteur est de 29 GHz.

### Premier et deuxième substrats diélectriques

A titre d'exemple non limitatif, les premier et deuxième substrats diélectriques S1, S2 peuvent être réalisés dans un matériau commercial tel que le RT/duroid^{®} 6002.

Les premier et deuxième substrats diélectriques S1, S2 présentent une épaisseur adaptée à la fréquence de fonctionnement de l'antenne à réseau transmetteur, et à la bande passante à couvrir. L'épaisseur des premier et deuxième substrats diélectriques S1, S2 est typiquement comprise entre 100 µm et 1500 µm pour une fréquence de fonctionnement comprise entre 10 GHz et 300 GHz. A titre d'exemple non limitatif, les premier et deuxième substrats diélectriques S1, S2 peuvent présenter une épaisseur de l'ordre de 254 µm lorsque la fréquence de fonctionnement est de 29 GHz.

### Cellule élémentaire passive avec 3 antennes planaires

Ce mode de réalisation est illustré à la figure 5.

La troisième antenne planaire A3 s'étend avantageusement à la première surface S10 du premier substrat diélectrique S1.

Les première, deuxième et troisième antennes planaires A1, A2, A3 sont avantageusement configurées pour opérer dans la même bande passante. La bande passante est de préférence comprise entre 10 GHz et 300 GHz.

Les première et troisième antennes planaires A1, A3 peuvent être orientées suivant deux polarisations linéaires orthogonales. Selon une alternative, les première et troisième antennes planaires A1, A3 sont mobiles en rotation par rapport à la deuxième antenne planaire A2.

La cellule élémentaire 1 comporte avantageusement un troisième substrat diélectrique S3 sur lequel s'étend le plan de masse PM.

La cellule élémentaire 1 comporte avantageusement un film de collage FC agencé pour coller le plan de masse PM à la première surface S20 du deuxième substrat diélectrique S2. La cellule élémentaire 1 comporte avantageusement un film de collage FC agencé pour coller le troisième substrat diélectrique S3 à la première surface S10 du premier substrat diélectrique S1. A titre d'exemples non limitatifs, les films de collage FC peuvent être réalisés dans un matériau de type copolymère thermoplastique tel que le chlorotrifluoroéthylène (CTFE). On peut citer comme films de collage commerciaux le CuClad^{®} 6700.

Le multiplexage de deux signaux provenant de deux sources primaires irradiant le réseau transmetteur est autorisé lorsque les première et troisième antennes planaires A1, A3 sont des antennes de réception agencées pour recevoir les deux signaux, et la deuxième antenne planaire A2 est une antenne de transmission du signal multiplexé.

Le démultiplexage d'un signal composite provenant d'une source primaire irradiant le réseau transmetteur est autorisé lorsque la deuxième antenne planaire A2 est une antenne de réception du signal composite et les première et troisième antennes planaires A1, A3 sont des antennes de transmission des composantes du signal composite.

### Cellule élémentaire passive avec 4 antennes planaires

Ce mode de réalisation est illustré à la figure 6.

La cellule élémentaire 1 comporte une quatrième antenne planaire A4, s'étendant entre le plan de masse PM et la première surface S20 du deuxième substrat diélectrique S2, et connectée électriquement au trou d'interconnexion 2.

Les première et troisième antennes planaires A1, A3 sont configurées pour opérer dans deux bandes passantes B1, B2 différentes. Les deuxième et quatrième antennes planaires A2, A4 sont configurées pour opérer dans lesdites deux bandes passantes B1, B2 différentes. Les deux bandes passantes sont de préférence comprises entre 10 GHz et 300 GHz. Autrement dit, les première et troisième antennes planaires A1, A3 sont configurées pour opérer respectivement dans des première et deuxième bandes passantes B1, B2 différentes. Les deuxième et quatrième antennes planaires A2, A4 sont configurées pour opérer respectivement dans les première et deuxième bandes passantes B1, B2 ou respectivement dans les deuxième et première bandes passantes B2, B1. Comme illustré aux figures 1 à 4, les deuxième et quatrième antennes planaires A2, A4 sont configurées pour opérer respectivement dans les deuxième et première bandes passantes B2, B1. Toutefois, les deuxième et quatrième antennes planaires A2, A4 peuvent être configurées pour opérer respectivement dans les première et deuxième bandes passantes B1, B2.

La troisième antenne planaire A3 s'étend avantageusement à la première surface S10 du premier substrat diélectrique S1. La quatrième antenne planaire A4 s'étend avantageusement à la première surface S20 du deuxième substrat diélectrique S2.

La cellule élémentaire 1 comporte avantageusement un troisième substrat diélectrique S3 sur lequel s'étend le plan de masse PM.

La cellule élémentaire 1 comporte avantageusement un film de collage FC agencé pour coller le plan de masse PM à la première surface S20 du deuxième substrat diélectrique S2. La cellule élémentaire 1 comporte avantageusement un film de collage FC agencé pour coller le troisième substrat diélectrique S3 à la première surface S10 du premier substrat diélectrique S1. A titre d'exemples non limitatifs, les films de collage FC peuvent être réalisés dans un matériau de type copolymère thermoplastique tel que le chlorotrifluoroéthylène (CTFE). On peut citer comme films de collage commerciaux le CuClad^{®} 6700.

Comme illustré aux figures 1 à 4, il est possible de générer correctement deux états de phase pour deux ondes incidentes provenant de deux sources primaires opérant dans deux bandes passantes différentes, avec éventuellement des états de polarisation différents.

Dans le mode de réalisation illustré à la figure 1, la cellule élémentaire 1 autorise un seul état de polarisation linéaire pour les deux rayonnements transmis par les deuxième et quatrième antennes planaires A2, A4. Les deuxième et quatrième antennes planaires A2, A4 peuvent subir une rotation de 180° autour de la normale à leurs surfaces de rayonnement afin de générer deux états de phase.

Dans le mode de réalisation illustré à la figure 2, la cellule élémentaire 1 autorise deux états de polarisation linéaires (orthogonaux) pour les deux rayonnements transmis par les deuxième et quatrième antennes planaires A2, A4. Les première et troisième antennes planaires A1, A3 peuvent subir une rotation de 180° autour de la normale à leurs surfaces de rayonnement afin de générer deux états de phase.

Dans le mode réalisation illustré à la figure 3, la cellule élémentaire 1 autorise un seul état de polarisation circulaire pour les deux rayonnements transmis par les deuxième et quatrième antennes planaires A2, A4. Les deuxième et quatrième antennes planaires A2, A4 présentent deux sommets opposés chanfreinés de manière à obtenir une polarisation circulaire. Les deuxième et quatrième antennes planaires A2, A4 peuvent être mobiles en rotation autour de la normale à leurs surfaces de rayonnement afin de générer un ensemble d'états de phase.

Dans le mode réalisation illustré à la figure 4, la cellule élémentaire 1 autorise deux états de polarisation circulaires (droite et gauche) pour les deux rayonnements transmis par les deuxième et quatrième antennes planaires A2, A4. Les deuxième et quatrième antennes planaires A2, A4 présentent deux sommets opposés chanfreinés différents de manière à obtenir des polarisations circulaires droite et gauche. Les deuxième et quatrième antennes planaires A2, A4 peuvent être mobiles en rotation autour de la normale à leurs surfaces de rayonnement afin de générer un ensemble d'états de phase.

### Cellule élémentaire active avec 4 antennes planaires : contrôle du déphasage commun sur les 2 bandes passantes

Ce mode de réalisation est illustré à la figure 7. Ce mode de réalisation permet notamment de générer correctement, de manière active avec un circuit de déphasage, deux états de phase pour deux ondes incidentes provenant de deux sources primaires opérant dans deux bandes passantes différentes, avec éventuellement des états de polarisation différents.

La cellule élémentaire 1 comporte une quatrième antenne planaire A4, s'étendant entre le plan de masse PM et la première surface S20 du deuxième substrat diélectrique S2, et connectée électriquement au trou d'interconnexion 2.

Les première et troisième antennes planaires A1, A3 sont configurées pour opérer dans deux bandes passantes B1, B2 différentes. Les deuxième et quatrième antennes planaires A2, A4 sont configurées pour opérer dans lesdites deux bandes passantes B1, B2 différentes. Les deux bandes passantes sont de préférence comprises entre 10 GHz et 300 GHz. Autrement dit, les première et troisième antennes planaires A1, A3 sont configurées pour opérer respectivement dans des première et deuxième bandes passantes B1, B2 différentes. Les deuxième et quatrième antennes planaires A2, A4 sont configurées pour opérer respectivement dans les première et deuxième bandes passantes B1, B2 ou respectivement dans les deuxième et première bandes passantes B2, B1.

La troisième antenne planaire A3 s'étend avantageusement à la première surface S10 du premier substrat diélectrique S1. La quatrième antenne planaire A4 s'étend avantageusement à la première surface S20 du deuxième substrat diélectrique S2.

La première antenne planaire A1 présente des première et seconde surfaces de rayonnement A10, A11 disjointes, au sens où elles sont séparées entre elles par une zone de séparation de manière à être électriquement isolées entre elles. A cet effet, une fente est avantageusement formée dans la première antenne planaire A1 pour isoler électriquement les première et seconde surfaces de de rayonnement A10, A11 disjointes. La fente définit la zone de séparation. La fente est préférentiellement annulaire, à section rectangulaire. Bien entendu, d'autres formes sont envisageables pour la fente, telles qu'une forme elliptique ou circulaire. Selon une variante d'exécution, l'isolation électrique des première et seconde surfaces de rayonnement A10, A11 de la première antenne planaire A1 peut être assurée par un matériau diélectrique.

Les première et seconde surfaces de rayonnement A10, A11 de la première antenne planaire A1 présentent avantageusement un axe de symétrie afin de ne pas dégrader la polarisation de l'onde incidente. La première surface de rayonnement A10 de la première antenne planaire A1 forme préférentiellement un anneau à section rectangulaire. La seconde surface de rayonnement A11 de la première antenne planaire A1 forme préférentiellement une bande rectangulaire. La seconde surface de rayonnement A11 de la première antenne planaire A1 est avantageusement circonscrite par la première surface de rayonnement A10 de la première antenne planaire A1 afin d'éviter la formation de courants parasites. Les première et seconde surfaces de rayonnement A10, A11 de la première antenne planaire A1 sont préférentiellement réalisées dans un matériau métallique, plus préférentiellement le cuivre. Des surfaces de rayonnement additionnelles peuvent être avantageusement empilées sur les première et seconde surfaces de rayonnement A10, A11 de la première antenne planaire A1 afin d'augmenter la bande passante B1 de la première antenne planaire A1.

La cellule élémentaire 1 comporte un premier circuit de déphasage comprenant :
- des premier et second commutateurs 3, 4 présentant respectivement un état passant et un état bloqué en alternance, les états passant ou bloqué correspondant à une circulation d'un courant, respectivement autorisée ou bloquée, entre les première et seconde surfaces de rayonnement A10, A11 disjointes de la première antenne planaire A1,
- des premières lignes de polarisation BL1, agencées pour polariser les premier et second commutateurs 3, 4 du premier circuit de déphasage.

Les premières lignes de polarisation BL1 sont des pistes électriquement conductrices, formant des moyens de commande des premier et second commutateurs 3, 4 du premier circuit de déphasage. Les premières lignes de polarisation BL1 sont préférentiellement réalisées dans un matériau métallique, plus préférentiellement le cuivre.

Les première et troisième antennes planaires A1, A3 sont connectées électriquement aux premières lignes de polarisation BL1, de préférence par l'intermédiaire de premiers trous d'interconnexion 7a. Les deuxième et quatrième antennes planaires A2, A4 sont connectées électriquement au plan de masse PM, de préférence par l'intermédiaire de deuxièmes trous d'interconnexion 7b.

La cellule élémentaire 1 comporte avantageusement un troisième substrat diélectrique S3 s'étendant entre le plan de masse PM et la troisième antenne planaire A3. Les premières lignes de polarisation BL1 s'étendent avantageusement sur le troisième substrat diélectrique S3. La cellule élémentaire 1 comporte avantageusement un quatrième substrat diélectrique S4, sur lequel s'étend le plan de masse PM. La cellule élémentaire 1 comporte avantageusement un film de collage FC agencé pour coller le plan de masse PM au troisième substrat diélectrique S3. La cellule élémentaire 1 comporte avantageusement un film de collage FC agencé pour coller le troisième substrat diélectrique S3 à la première surface S10 du premier substrat diélectrique S1. La cellule élémentaire 1 comporte avantageusement un film de collage FC agencé pour coller le quatrième substrat diélectrique S4 à la première surface S20 du deuxième substrat diélectrique S2. A titre d'exemples non limitatifs, les films de collage FC peuvent être réalisés dans un matériau de type copolymère thermoplastique tel que le chlorotrifluoroéthylène (CTFE). On peut citer comme films de collage commerciaux le CuClad^{®} 6700.

A titre d'exemple non limitatif, les troisième et quatrième substrats diélectriques S3, S4 peuvent être réalisés dans un matériau commercial tel que le RT/duroid^{®} 6002. Les troisième et quatrième substrats diélectriques S3, S4 présentent une épaisseur adaptée à la fréquence de fonctionnement de l'antenne à réseau transmetteur, et à la bande passante à couvrir. L'épaisseur des troisième et quatrième substrats diélectriques S3, S4 est typiquement comprise entre 100 µm et 1500 µm pour une fréquence de fonctionnement comprise entre 10 GHz et 300 GHz. A titre d'exemple non limitatif, les troisième et quatrième substrats diélectriques S3, S4 peuvent présenter une épaisseur de l'ordre de 254 µm lorsque la fréquence de fonctionnement est de 29 GHz.

Les premier et second commutateurs 3, 4 du premier circuit de déphasage peuvent s'étendre sur les première et seconde surfaces de rayonnement A10, A11 de la première antenne planaire A1. A titre de variante, les premier et second commutateurs 3, 4 du premier circuit de déphasage peuvent être formés à la seconde surface S11 du premier substrat diélectrique S1, dans la zone de séparation des première et seconde surfaces de rayonnement A10, A11 de la première antenne planaire A1. Les premier et second commutateurs 3, 4 du premier circuit de déphasage sont avantageusement formés à la seconde surface S11 du premier substrat diélectrique S1, dans la zone de séparation, de manière monolithique avec la première antenne planaire A1. Par « monolithique », on entend que la première antenne planaire A1 et les premier et second commutateurs 3, 4 du premier circuit de déphasage partagent un unique substrat, en l'espèce le premier substrat diélectrique S1.

A titre d'exemples non limitatifs, les premier et second commutateurs 3, 4 du premier circuit de déphasage peuvent être des diodes de type p-i-n, des MEMS (« *Micro Electro-Mechanical Systems* » en langue anglaise), des NEMS (« *Nano Electro-Mechanical Systems* » en langue anglaise). Les diodes de type p-i-n peuvent être réalisées en AlGaAs. D'autres formes d'exécution sont envisageables pour les commutateurs. A titre d'exemples non limitatifs, des commutateurs radiofréquence de type diodes, transistors, photodiodes, phototransistor sont possibles. Le choix d'un dispositif pour commander les commutateurs dépend de la technologie choisie. A titre d'exemples, les dispositifs suivants peuvent être utilisés :
- une fibre optique pour un commutateur de type photoélectrique,
- un faisceau laser généré par des moyens extérieurs et excitant un commutateur de type photoélectrique,
- une onde électromagnétique selon les principes de la télé-alimentation connus du domaine de la RFID (« *Radio Frequency Identification* » en langue anglaise).

### Cellule élémentaire active avec 4 antennes planaires : contrôle du déphasage indépendant sur les 2 bandes passantes

Ce mode de réalisation est illustré à la figure 8. Ce mode de réalisation permet notamment de générer correctement, de manière active avec deux circuits de déphasage, deux états de phase pour deux ondes incidentes provenant de deux sources primaires opérant dans deux bandes passantes différentes, avec éventuellement des états de polarisation différents.

La cellule élémentaire 1 comporte une quatrième antenne planaire A4, s'étendant entre le plan de masse PM et la première surface S20 du deuxième substrat diélectrique S2, et connectée électriquement au trou d'interconnexion 2.

Les première et troisième antennes planaires A1, A3 sont configurées pour opérer dans deux bandes passantes B1, B2 différentes. Les deuxième et quatrième antennes planaires A2, A4 sont configurées pour opérer dans lesdites deux bandes passantes B1, B2 différentes. Les deux bandes passantes sont de préférence comprises entre 10 GHz et 300 GHz. Autrement dit, les première et troisième antennes planaires A1, A3 sont configurées pour opérer respectivement dans des première et deuxième bandes passantes B1, B2 différentes. Les deuxième et quatrième antennes planaires A2, A4 sont configurées pour opérer respectivement dans les deuxième et première bandes passantes B2, B1, de sorte que les première et deuxième antennes planaires A1, A2 sont configurées pour opérer dans deux bandes passantes B1, B2 différentes. La première antenne planaire A1 est configurée pour opérer dans la première bande passante B1, tandis que la deuxième antenne planaire A2 est configurée pour opérer dans la deuxième bande passante B2.

Les première et deuxième antennes planaires A1, A2 présentent chacune des première et seconde surfaces de rayonnement A10, A20 ; A11, A21 disjointes. La première antenne planaire A1 présente des première et seconde surfaces de rayonnement A10, A11 disjointes, au sens où elles sont séparées entre elles par une zone de séparation de manière à être électriquement isolées entre elles. A cet effet, une fente est avantageusement formée dans la première antenne planaire A1 pour isoler électriquement les première et seconde surfaces de de rayonnement A10, A11 disjointes. La fente définit la zone de séparation. La fente est préférentiellement annulaire, à section rectangulaire. Bien entendu, d'autres formes sont envisageables pour la fente, telles qu'une forme elliptique ou circulaire. Selon une variante d'exécution, l'isolation électrique des première et seconde surfaces de rayonnement A10, A11 de la première antenne planaire A1 peut être assurée par un matériau diélectrique.

La deuxième antenne planaire A2 présente des première et seconde surfaces de rayonnement A20, A21 disjointes, au sens où elles sont séparées entre elles par une zone de séparation de manière à être électriquement isolées entre elles. A cet effet, une fente est avantageusement formée dans la deuxième antenne planaire A2 pour isoler électriquement les première et seconde surfaces de rayonnement A20, A21 disjointes. La fente définit la zone de séparation. La fente est préférentiellement annulaire, à section rectangulaire. Bien entendu, d'autres formes sont envisageables pour la fente, telles qu'une forme elliptique ou circulaire. Selon une variante d'exécution, l'isolation électrique des première et seconde surfaces de rayonnement A20, A21 de la deuxième antenne planaire A2 peut être assurée par un matériau diélectrique.

Les première et seconde surfaces de rayonnement A10, A11 de la première antenne planaire A1 présentent avantageusement un axe de symétrie afin de ne pas dégrader la polarisation de l'onde incidente. La première surface de rayonnement A10 de la première antenne planaire A1 forme préférentiellement un anneau à section rectangulaire. La seconde surface de rayonnement A11 de la première antenne planaire A1 forme préférentiellement une bande rectangulaire. La seconde surface de rayonnement A11 de la première antenne planaire A1 est avantageusement circonscrite par la première surface de rayonnement A10 de la première antenne planaire A1 afin d'éviter la formation de courants parasites. Les première et seconde surfaces de rayonnement A10, A11 de la première antenne planaire A1 sont préférentiellement réalisées dans un matériau métallique, plus préférentiellement le cuivre. Des surfaces de rayonnement additionnelles peuvent être avantageusement empilées sur les première et seconde surfaces de rayonnement A10, A11 de la première antenne planaire A1 afin d'augmenter la bande passante B1 de la première antenne planaire A1.

Les première et seconde surfaces de rayonnement A20, A21 de la deuxième antenne planaire A2 présentent avantageusement un axe de symétrie afin de ne pas dégrader la polarisation de l'onde incidente. La première surface de rayonnement A20 de la deuxième antenne planaire A2 forme préférentiellement un anneau à section rectangulaire. La seconde surface de rayonnement A21 de la deuxième antenne planaire A2 forme préférentiellement une bande rectangulaire. La seconde surface de rayonnement A21 de la deuxième antenne planaire A2 est avantageusement circonscrite par la première surface de rayonnement A20 de la deuxième antenne planaire A2 afin d'éviter la formation de courants parasites. Les première et seconde surfaces de rayonnement A20, A21 de la deuxième antenne planaire A2 sont préférentiellement réalisées dans un matériau métallique, plus préférentiellement le cuivre. Des surfaces de rayonnement additionnelles peuvent être avantageusement empilées sur les première et seconde surfaces de rayonnement A20, A21 de la deuxième antenne planaire A2 afin d'augmenter la bande passante B2 de la deuxième antenne planaire A2.

La cellule élémentaire 1 comporte :
- un premier circuit de déphasage comprenant :
   des premier et second commutateurs 3, 4 présentant respectivement un état passant et un état bloqué en alternance, les états passant ou bloqué correspondant à une circulation d'un courant, respectivement autorisée ou bloquée, entre les première et seconde surfaces de rayonnement A10, A11 disjointes de la première antenne planaire A1,
   des premières lignes de polarisation BL1, agencées à la première surface S10 du premier substrat diélectrique S1 pour polariser les premier et second commutateurs 3, 4 du premier circuit de déphasage ;
- un deuxième circuit de déphasage comprenant :
   des premier et second commutateurs 5, 6 présentant respectivement un état passant et un état bloqué en alternance, les états passant ou bloqué correspondant à une circulation d'un courant, respectivement autorisée ou bloquée, entre les première et seconde surfaces de rayonnement A20, A21 disjointes de la deuxième antenne planaire A2,
   des deuxièmes lignes de polarisation BL2, agencées à la première surface S20 du deuxième substrat diélectrique S2 pour polariser les premier et second commutateurs 5, 6 du deuxième circuit de déphasage.

Les premières lignes de polarisation BL1 sont des pistes électriquement conductrices, formant des moyens de commande des premier et second commutateurs 3, 4 du premier circuit de déphasage. Les premières lignes de polarisation BL1 sont préférentiellement réalisées dans un matériau métallique, plus préférentiellement le cuivre. Les deuxièmes lignes de polarisation BL2 sont des pistes électriquement conductrices, formant des moyens de commande des premier et second commutateurs 5, 6 du deuxième circuit de déphasage. Les deuxièmes lignes de polarisation BL2 sont préférentiellement réalisées dans un matériau métallique, plus préférentiellement le cuivre.

La première antenne planaire A1 est connectée électriquement aux premières lignes de polarisation BL1, de préférence par l'intermédiaire de premiers trous d'interconnexion 7a. La deuxième antenne planaire A2 est connectée électriquement aux deuxièmes lignes de polarisation BL2, de préférence par l'intermédiaire de premiers trous d'interconnexion 7a.

Les première et deuxième antennes planaires A1, A2 sont configurées pour opérer dans deux bandes passantes B1, B2 différentes. Comme évoqué précédemment, la première antenne planaire A1 est configurée pour opérer dans la première bande passante B1, tandis que la deuxième antenne planaire A2 est configurée pour opérer dans la deuxième bande passante B2.

Les troisième et quatrième antennes planaires A3, A4 sont connectées électriquement au plan de masse PM, de préférence par l'intermédiaire de deuxièmes trous d'interconnexion 7b.

La cellule élémentaire 1 comporte avantageusement :
- un troisième substrat diélectrique S3, s'étendant entre le plan de masse PM et le premier substrat diélectrique S1, la troisième antenne planaire A3 s'étendant sur le troisième substrat diélectrique S3 ;
- un quatrième substrat diélectrique S4, comprenant une première surface S40 sur laquelle s'étend le plan de masse PM, et une seconde surface S41 opposée sur laquelle s'étend la quatrième antenne planaire A4.

La cellule élémentaire 1 comporte avantageusement un film de collage FC agencé pour coller le plan de masse PM au troisième substrat diélectrique S3. La cellule élémentaire 1 comporte avantageusement un film de collage FC agencé pour coller le troisième substrat diélectrique S3 à la première surface S10 du premier substrat diélectrique S1. La cellule élémentaire 1 comporte avantageusement un film de collage FC agencé pour coller le quatrième substrat diélectrique S4 à la première surface S20 du deuxième substrat diélectrique S2. A titre d'exemples non limitatifs, les films de collage FC peuvent être réalisés dans un matériau de type copolymère thermoplastique tel que le chlorotrifluoroéthylène (CTFE). On peut citer comme films de collage commerciaux le CuClad^{®} 6700.

A titre d'exemple non limitatif, les troisième et quatrième substrats diélectriques S3, S4 peuvent être réalisés dans un matériau commercial tel que le RT/duroid^{®} 6002. Les troisième et quatrième substrats diélectriques S3, S4 présentent une épaisseur adaptée à la fréquence de fonctionnement de l'antenne à réseau transmetteur, et à la bande passante à couvrir. L'épaisseur des troisième et quatrième substrats diélectriques S3, S4 est typiquement comprise entre 100 µm et 1500 µm pour une fréquence de fonctionnement comprise entre 10 GHz et 300 GHz. A titre d'exemple non limitatif, les troisième et quatrième substrats diélectriques S3, S4 peuvent présenter une épaisseur de l'ordre de 254 µm lorsque la fréquence de fonctionnement est de 29 GHz.

Les premier et second commutateurs 3, 4 du premier circuit de déphasage peuvent s'étendre sur les première et seconde surfaces de rayonnement A10, A11 de la première antenne planaire A1. A titre de variante, les premier et second commutateurs 3, 4 du premier circuit de déphasage peuvent être formés à la seconde surface S11 du premier substrat diélectrique S1, dans la zone de séparation des première et seconde surfaces de rayonnement A10, A11 de la première antenne planaire A1. Les premier et second commutateurs 3, 4 du premier circuit de déphasage sont avantageusement formés à la seconde surface S11 du premier substrat diélectrique S1, dans la zone de séparation, de manière monolithique avec la première antenne planaire A1. Par « monolithique », on entend que la première antenne planaire A1 et les premier et second commutateurs 3, 4 du premier circuit de déphasage partagent un unique substrat, en l'espèce le premier substrat diélectrique S1.

Les premier et second commutateurs 5, 6 du deuxième circuit de déphasage peuvent s'étendre sur les première et seconde surfaces de rayonnement A20, A21 de la deuxième antenne planaire A2. A titre de variante, les premier et second commutateurs 5, 6 du deuxième circuit de déphasage peuvent être formés à la seconde surface S21 du deuxième substrat diélectrique S2, dans la zone de séparation des première et seconde surfaces de rayonnement A20, A21 de la deuxième antenne planaire A2. Les premier et second commutateurs 5, 6 du deuxième circuit de déphasage sont avantageusement formés à la seconde surface S21 du deuxième substrat diélectrique S2, dans la zone de séparation, de manière monolithique avec la deuxième antenne planaire A2. Par « monolithique », on entend que la deuxième antenne planaire A2 et les premier et second commutateurs 5, 6 du deuxième circuit de déphasage partagent un unique substrat, en l'espèce le deuxième substrat diélectrique S2.

A titre d'exemples non limitatifs, les premier et second commutateurs 3, 4 ; 5, 6 des premier et deuxième circuits de déphasage peuvent être des diodes de type p-i-n, des MEMS (« *Micro Electro-Mechanical Systems* » en langue anglaise), des NEMS (« *Nano Electro-Mechanical Systems* » en langue anglaise). Les diodes de type p-i-n peuvent être réalisées en AlGaAs. D'autres formes d'exécution sont envisageables pour les commutateurs. A titre d'exemples non limitatifs, des commutateurs radiofréquence de type diodes, transistors, photodiodes, phototransistor sont possibles. Le choix d'un dispositif pour commander les commutateurs dépend de la technologie choisie. A titre d'exemples, les dispositifs suivants peuvent être utilisés :
- une fibre optique pour un commutateur de type photoélectrique,
- un faisceau laser généré par des moyens extérieurs et excitant un commutateur de type photoélectrique,
- une onde électromagnétique selon les principes de la télé-alimentation connus du domaine de la RFID (« *Radio Frequency Identification* » en langue anglaise).

### Connexion électrique entre les antennes planaires

Les première, deuxième, troisième et le cas échéant quatrième antennes planaires A1, A2, A3, A4 sont électriquement connectées entre elles, afin de pouvoir les alimenter et de les coupler, en partie par l'intermédiaire du trou d'interconnexion 2 principal (« *via* » en langue anglaise), de préférence central, de préférence métallique. Le trou d'interconnexion 2 principal traverse une ouverture formée dans le plan de masse PM. Le trou d'interconnexion 2 principal n'est pas en contact avec le plan de masse PM de sorte que le trou d'interconnexion 2 principal est électriquement isolé du plan de masse PM. A titre d'exemple, pour une fréquence de fonctionnement de 29 GHz, le trou d'interconnexion 2 principal présente un diamètre de l'ordre de 150 µm. Le trou d'interconnexion 2 principal est préférentiellement connecté aux première, deuxième, troisième quatrième antennes planaires A1, A2, A3, A4 par des points de connexion. De manière générale, la position des points de connexion varie selon la géométrie spécifique des antennes planaires de manière à exciter le mode fondamental de résonance. Le trou d'interconnexion 2 principal s'étend avantageusement suivant la normale aux surfaces des antennes planaires. Il est à noter que le trou d'interconnexion 2 principal traverse les substrats diélectriques S1 à S4 et les films de collage FC.

### Antenne reconfigurable

L'invention a également pour objet une antenne reconfigurable à une fréquence de fonctionnement, comportant :
- un réseau transmetteur comprenant un ensemble de cellules élémentaires 1 selon l'invention ;
- des première et seconde sources rayonnantes, opérant respectivement dans des première et seconde bandes B1, B2 passantes, et agencées pour illuminer le réseau transmetteur.

La fréquence de fonctionnement est de préférence comprise entre 10 GHz et 300 GHz.

L'invention ne se limite pas aux modes de réalisation exposés. L'homme du métier est mis à même de considérer leurs combinaisons techniquement opérantes, et de leur substituer des équivalents.

## Revendications

1. Cellule élémentaire (1) d'un réseau transmetteur pour transmettre une onde incidente avec un déphasage, la cellule élémentaire (1) comportant :
- un plan de masse (PM) ;
- des premier et deuxième substrats diélectriques (S1, S2), agencés de part et d'autre du plan de masse (PM), et présentant chacun une première surface (S10, S20), orientée vers le plan de masse (PM), et une seconde surface (S11, S21) opposée à la première surface (S10, S20) ;
- des première et deuxième antennes planaires (A1, A2), s'étendant respectivement à la seconde surface (511, S21) des premier et deuxième substrats diélectriques (S1, S2) ;
- un trou d'interconnexion (2), agencé pour traverser les premier et deuxième substrats diélectriques (S1, S2) de manière à connecter électriquement les première et deuxième antennes planaires (A1, A2) ; le trou d'interconnexion (2) étant électriquement isolé du plan de masse (PM) ;
la cellule élémentaire (1) étant **caractérisée en ce qu'**elle comporte une troisième antenne planaire (A3), s'étendant entre le plan de masse (PM) et la première surface (S10) du premier substrat diélectrique (S1), et connectée électriquement au trou d'interconnexion (2).

2. Cellule élémentaire (1) selon la revendication 1, dans laquelle la troisième antenne planaire (A3) s'étend à la première surface (S10) du premier substrat diélectrique (S1).

3. Cellule élémentaire (1) selon la revendication 1 ou 2, dans laquelle les première, deuxième et troisième antennes planaires (A1, A2, A3) sont configurées pour opérer dans la même bande passante.

4. Cellule élémentaire (1) selon la revendication 3, dans laquelle les première et troisième antennes planaires (A1, A3) sont orientées suivant deux polarisations linéaires orthogonales.

5. Cellule élémentaire (1) selon la revendication 3, dans laquelle les première et troisième antennes planaires (A1, A3) sont mobiles en rotation par rapport à la deuxième antenne planaire.

6. Cellule élémentaire (1) selon la revendication 1 ou 2, comportant une quatrième antenne planaire (A4), s'étendant entre le plan de masse (PM) et la première surface (S20) du deuxième substrat diélectrique (S2), et connectée électriquement au trou d'interconnexion (2) ; les première et troisième antennes planaires (A1, A3) sont configurées pour opérer respectivement dans des première et deuxième bandes passantes (B1, B2) différentes ; les deuxième et quatrième antennes planaires (A2, A4) sont configurées pour opérer respectivement dans les première et deuxième bandes passantes (B1, B2) ou respectivement dans les deuxième et première bandes passantes (B2, B1).

7. Cellule élémentaire (1) selon la revendication 6, dans laquelle la quatrième antenne planaire (A4) s'étend à la première surface (S20) du deuxième substrat diélectrique (S2).

8. Cellule élémentaire (1) selon la revendication 7 en combinaison avec la revendication 2, dans laquelle la première antenne planaire (A1) présente des première et seconde surfaces de rayonnement (A10, A11) disjointes ;
la cellule élémentaire (1) comportant un premier circuit de déphasage comprenant :
- des premier et second commutateurs (3, 4) présentant respectivement un état passant et un état bloqué en alternance, les états passant ou bloqué correspondant à une circulation d'un courant, respectivement autorisée ou bloquée, entre les première et seconde surfaces de rayonnement (A10, A11) disjointes de la première antenne planaire (A1),
- des premières lignes de polarisation (BL1), agencées pour polariser les premier et second commutateurs (3, 4) du premier circuit de déphasage ;
les première et troisième antennes planaires (A1, A3) étant connectées électriquement aux premières lignes de polarisation (BL1), les deuxième et quatrième antennes planaires étant connectées électriquement au plan de masse (PM).

9. Cellule élémentaire (1) selon la revendication 8, comportant un troisième substrat diélectrique (S3) s'étendant entre le plan de masse (PM) et la troisième antenne planaire (A3), les premières lignes de polarisation (BL1) s'étendant sur le troisième substrat diélectrique (S3).

10. Cellule élémentaire (1) selon la revendication 6 en combinaison avec la revendication 1, dans laquelle les première et deuxième antennes planaires (A1, A2) présentent chacune des première et seconde surfaces de rayonnement (A10, A11 ; A20, A21) disjointes ; la cellule élémentaire (1) comportant :
- un premier circuit de déphasage comprenant :
des premier et second commutateurs (3, 4) présentant respectivement un état passant et un état bloqué en alternance, les états passant ou bloqué correspondant à une circulation d'un courant, respectivement autorisée ou bloquée, entre les première et seconde surfaces de rayonnement (A10, A11) disjointes de la première antenne planaire (A1),
des premières lignes de polarisation (BL1), agencées à la première surface (S10) du premier substrat diélectrique (S1) pour polariser les premier et second commutateurs (3, 4) du premier circuit de déphasage ; la première antenne planaire (A1) étant connectée électriquement aux premières lignes de polarisation (BL1) ;
- un deuxième circuit de déphasage comprenant :
des premier et second commutateurs (5, 6) présentant respectivement un état passant et un état bloqué en alternance, les états passant ou bloqué correspondant à une circulation d'un courant, respectivement autorisée ou bloquée, entre les première et seconde surfaces de rayonnement (A20, A21) disjointes de la deuxième antenne planaire (A2),
des deuxièmes lignes de polarisation (BL2), agencées à la première surface (S20) du deuxième substrat diélectrique (S2) pour polariser les premier et second commutateurs (5, 6) du deuxième circuit de déphasage ; la deuxième antenne planaire (A2) étant connectée électriquement aux deuxièmes lignes de polarisation (BL2) ;
les deuxième et quatrième antennes planaires (A2, A4) étant configurées pour opérer respectivement dans les deuxième et première bandes passantes (B2, B1) de sorte que les première et deuxième antennes planaires (A1, A2) sont configurées pour opérer dans deux bandes passantes différentes (B1, B2), les troisième et quatrième antennes planaires (A3, A4) étant connectées électriquement au plan de masse (PM).

11. Cellule élémentaire (1) selon la revendication 10, comportant :
- un troisième substrat diélectrique (S3), s'étendant entre le plan de masse (PM) et le premier substrat diélectrique (S1), la troisième antenne planaire (A3) s'étendant sur le troisième substrat diélectrique (S3) ;
- un quatrième substrat diélectrique (S4), comprenant une première surface (S40) sur laquelle s'étend le plan de masse (PM), et une seconde surface (S41) opposée sur laquelle s'étend la quatrième antenne planaire (A4).

12. Antenne reconfigurable à une fréquence de fonctionnement, comportant :
- un réseau transmetteur comprenant un ensemble de cellules élémentaires (1) selon l'une des revendications 6 à 11 ;
- des première et seconde sources rayonnantes, opérant respectivement dans des première et seconde bandes passantes (B1, B2), et agencées pour illuminer le réseau transmetteur.

## Patentansprüche

1. Elementarzelle (1) eines Sendearrays zum Senden einer einfallenden Welle mit einer Phasenverschiebung, wobei die Elementarzelle (1) beinhaltet:
- eine Masseebene (PM);
- erste und zweite dielektrische Substrate (S1, S2), die beidseits der Masseebene (PM) eingerichtet sind und jeweils eine erste Oberfläche (S10, S20), die zu der Masseebene (PM) hin ausgerichtet ist, und eine zweite Oberfläche (S11, S21), die zu der ersten Oberfläche (S10, S20) entgegengesetzt ist, aufweisen;
- erste und zweite Planarantennen (A1, A2), die sich an der zweiten Oberfläche (S11, S21) der ersten bzw. zweiten dielektrischen Substrate (S1, S2) erstrecken;
- eine Durchkontaktierung (2), die dazu eingerichtet ist, die ersten und zweiten dielektrischen Substrate (S1, S2) zu durchqueren, so dass die ersten und zweiten Planarantennen (A1, A2) elektrisch verbunden werden; wobei die Durchkontaktierung (2) von der Masseebene (PM) elektrisch isoliert ist;
wobei die Elementarzelle (1) **dadurch gekennzeichnet ist, dass** sie eine dritte Planarantenne (A1) beinhaltet, die sich zwischen der Masseebene (PM) und der ersten Oberfläche (S10) des ersten dielektrischen Substrats (S1) erstreckt und mit der Durchkontaktierung (2) elektrisch verbunden ist.

2. Elementarzelle (1) nach Anspruch 1, wobei sich die dritte Planarantenne (A3) an der ersten Oberfläche (S10) des ersten dielektrischen Substrats (S1) erstreckt.

3. Elementarzelle (1) nach Anspruch 1 oder 2, wobei die ersten, zweiten und dritten Planarantennen (A1, A2, A3) dazu ausgestaltet sind, in demselben Durchlassband zu arbeiten.

4. Elementarzelle (1) nach Anspruch 3, wobei die ersten und dritten Planarantennen (A1, A3) entlang von zwei orthogonalen linearen Polarisationen ausgerichtet sind.

5. Elementarzelle (1) nach Anspruch 3, wobei die ersten und dritten Planarantennen (A1, A3) in Bezug auf die zweite Planarantenne drehbeweglich sind.

6. Elementarzelle (1) nach Anspruch 1 oder 2, beinhaltend eine vierte Planarantenne (A4), die sich zwischen der Masseebene (PM) und der ersten Oberfläche (S20) des zweiten dielektrischen Substrats (S2) erstreckt und mit der Durchkontaktierung (2) elektrisch verbunden ist; die ersten und dritten Planarantennen (A1, A3) sind dazu ausgestaltet, in verschiedenen ersten bzw. zweiten Durchlassbereichen (B1, B2) zu arbeiten; die zweiten und vierten Planarantennen (A2, A4) sind dazu ausgestaltet, in den ersten bzw. zweiten Durchlassbereichen (B1, B2) oder in den zweiten bzw. ersten Durchlassbereichen (B2, B1) zu arbeiten.

7. Elementarzelle (1) nach Anspruch 6, wobei sich die vierte Planarantenne (A4) an der ersten Oberfläche (S20) des zweiten dielektrischen Substrats (S2) erstreckt.

8. Elementarzelle (1) nach Anspruch 7 in Kombination mit Anspruch 2, wobei die erste Planarantenne (A1) getrennte erste und zweite Strahlungsflächen (A10, A11) aufweist; wobei die Elementarzelle (1) eine erste Phasenverschiebungsschaltung beinhaltet, die umfasst:
- erste und zweite Schalter (3, 4), die im Wechsel einen Durchlasszustand bzw. einen Sperrzustand aufweisen, wobei die Durchlass- oder Sperrzustände einem zugelassenen bzw. gesperrten Fluss eines Stroms zwischen den getrennten ersten und zweiten Strahlungsflächen (A10, A11) der ersten Planarantenne (A1) entsprechen,
- erste Polarisationsleitungen (BL1), die dazu eingerichtet sind, die ersten und zweiten Schalter (3, 4) der ersten Phasenverschiebungsschaltung zu polarisieren;
wobei die ersten und dritten Planarantennen (A1, A3) mit den ersten Polarisationsleitungen (BL1) elektrisch verbunden sind, wobei die zweiten und vierten Planarantennen mit der Masseebene (PM) elektrisch verbunden sind.

9. Elementarzelle (1) nach Anspruch 8, beinhaltend ein drittes dielektrisches Substrat (S3), das sich zwischen der Masseebene (PM) und der dritten Planarantenne (A3) erstreckt, wobei sich die ersten Polarisationsleitungen (BL1) auf dem dritten dielektrischen Substrat (S3) erstrecken.

10. Elementarzelle (1) nach Anspruch 6 in Kombination mit Anspruch 1, wobei die ersten und zweiten Planarantennen (A1, A2) jeweils getrennte erste und zweite Strahlungsflächen (A10, A11; A20, A21) aufweisen; wobei die Elementarzelle (1) beinhaltet:
- eine erste Phasenverschiebungsschaltung, umfassend:
erste und zweite Schalter (3, 4), die im Wechsel einen Durchlasszustand bzw. einen Sperrzustand aufweisen, wobei die Durchlass- oder Sperrzustände einem zugelassenen bzw. gesperrten Fluss eines Stroms zwischen den getrennten ersten und zweiten Strahlungsflächen (A10, A11) der ersten Planarantenne (A1) entsprechen, erste Polarisationsleitungen (BL1), die an der ersten Oberfläche (S10) des ersten dielektrischen Substrats (S1) eingerichtet sind, um die ersten und zweiten Schalter (3, 4) der ersten Phasenverschiebungsschaltung zu polarisieren; wobei die erste Planarantenne (A1) mit den ersten Polarisationsleitungen (BL1) elektrisch verbunden ist;
- eine zweite Phasenverschiebungsschaltung, umfassend:
erste und zweite Schalter (5, 6), die im Wechsel einen Durchlasszustand bzw. einen Sperrzustand aufweisen, wobei die Durchlass- oder Sperrzustände einem zugelassenen bzw. gesperrten Fluss eines Stroms zwischen den getrennten ersten und zweiten Strahlungsflächen (A20, A21) der zweiten Planarantenne (A2) entsprechen,
zweite Polarisationsleitungen (BL2), die an der ersten Oberfläche (S20) des zweiten dielektrischen Substrats (S2) eingerichtet sind, um die ersten und zweiten Schalter (5, 6) der zweiten Phasenverschiebungsschaltung zu polarisieren; wobei die zweite Planarantenne (A2) mit den zweiten Polarisationsleitungen (BL2) elektrisch verbunden ist;
wobei die zweiten und vierten Planarantennen (A2, A4) dazu ausgestaltet sind, in den zweiten bzw. ersten Durchlassbereichen (B2, B1) zu arbeiten, so dass die ersten und zweiten Planarantennen (A1, A2) dazu ausgestaltet sind, in zwei verschiedenen Durchlassbereichen (B1, B2) zu arbeiten, wobei die dritten und vierten Planarantennen (A3, A4) mit der Masseebene (PM) elektrisch verbunden sind.

11. Elementarzelle (1) nach Anspruch 10, beinhaltend:
- ein drittes dielektrisches Substrat (S3), das sich zwischen der Masseebene (PM) und dem ersten dielektrischen Substrat (S1) erstreckt, wobei sich die dritte Planarantenne (A3) auf dem dritten dielektrischen Substrat (S3) erstreckt;
- ein viertes dielektrisches Substrat (S4), das eine erste Oberfläche (S40) umfasst, auf der sich die Masseebene (PM) erstreckt, und eine entgegengesetzte zweite Oberfläche (S41), auf der sich die vierte Planarantenne (A4) erstreckt.

12. Antenne, die auf eine Betriebsfrequenz rekonfigurierbar ist, beinhaltend:
- ein Sendearray, das eine Anordnung von Elementarzellen (1) nach einem der Ansprüche 6 bis 11 umfasst;
- erste und zweite strahlende Quellen, die in ersten bzw. zweiten Durchlassbereichen (B1, B2) arbeiten und dazu eingerichtet sind, das Sendearray zu beleuchten.

## Claims

1. Unit cell (1) of a transmitter array for transmitting an incident wave with a phase shift, the unit cell (1) comprising:
- a ground plane (PM);
- first and second dielectric substrates (S1, S2), arranged on either side of the ground plane (PM), and each having a first surface (S10, S20), oriented toward the ground plane (PM), and a second surface (S11, S21), opposed to the first surface (S10, S20);
- first and second planar antennas (A1, A2), extending on the second surfaces (S11, S21) of the first and second dielectric substrates (S1, S2), respectively;
- a via (2), arranged to pass through the first and second dielectric substrates (S1, S2) so as to electrically connect the first and second planar antennas (A1, A2); the via (2) being electrically isolated from the ground plane (PM);
- the unit cell (1) being **characterized in that** it comprises a third planar antenna (A3), extending between the ground plane (PM) and the first surface (S10) of the first dielectric substrate (S1), and electrically connected to the via (2).

2. Unit cell (1) according to Claim 1, wherein the third planar antenna (A3) extends on the first surface (S10) of the first dielectric substrate (S1).

3. Unit cell (1) according to Claim 1 or 2, wherein the first, second and third planar antennas (A1, A2, A3) are configured to operate in the same passband.

4. Unit cell (1) according to Claim 3, wherein the first and third planar antennas (A1, A3) are oriented according to two orthogonal linear polarizations.

5. Unit cell (1) according to Claim 3, wherein the first and third planar antennas (A1, A3) are movable in rotation relative to the second planar antenna.

6. Unit cell (1) according to Claim 1 or 2, comprising a fourth planar antenna (A4), extending between the ground plane (PM) and the first surface (S20) of the second dielectric substrate (S2), and electrically connected to the via (2); the first and third planar antennas (A1, A3) are configured to operate in different first and second passbands (B1, B2), respectively; the second and fourth planar antennas (A2, A4) are configured to operate in the first and second passbands (B1, B2) respectively, or in the second and first passbands (B2, B1) respectively.

7. Unit cell (1) according to Claim 6, wherein the fourth planar antenna (A4) extends on the first surface (S20) of the second dielectric substrate (S2).

8. Unit cell (1) according to Claim 7, in combination with Claim 2, wherein the first planar antenna (A1) has separate first and second radiating surfaces (A10, A11); the unit cell (1) comprising a first phase-shift circuit comprising:
- first and second switches (3, 4) each having a conducting state and a non-conducting state alternately, the conducting and non-conducting states corresponding to a permitted or prevented flow of a current respectively, between the separate first and second radiating surfaces (A10, A11) of the first planar antenna (A1),
- first polarization lines (BL1), arranged to polarize the first and second switches (3, 4) of the first phase-shift circuit;
the first and third planar antennas (A1, A3) being electrically connected to the first polarization lines (BL1), and the second and fourth planar antennas being electrically connected to the ground plane (PM).

9. Unit cell (1) according to Claim 8, comprising a third dielectric substrate (S3), extending between the ground plane (PM) and the third planar antenna (A3), the first polarization lines (BL1) extending on the third dielectric substrate (S3).

10. Unit cell (1) according to Claim 6, in combination with Claim 1, wherein the first and second planar antennas (A1, A2) each have separate first and second radiating surfaces (A10, A11; A20, A21); the unit cell (1) comprising:
- a first phase-shift circuit, comprising:
first and second switches (3, 4), each having a conducting state and a non-conducting state alternately, the conducting and non-conducting states corresponding to a permitted or prevented flow of a current respectively, between the separate first and second radiating surfaces (A10, A11) of the first planar antenna (A1),
first polarization lines (BL1), arranged on the first surface (S10) of the first dielectric substrate (S1) to polarize the first and second switches (3, 4) of the first phase-shift circuit; the first planar antenna (A1) being electrically connected to the first polarization lines (BL1);
- a second phase-shift circuit, comprising:
first and second switches (5, 6), each having a conducting state and a non-conducting state alternately, the conducting and non-conducting states corresponding to a permitted or prevented flow of a current respectively, between the separate first and second radiating surfaces (A20, A21) of the second planar antenna (A2),
second polarization lines (BL2), arranged on the first surface (S20) of the second dielectric substrate (S2) to polarize the first and second switches (5, 6) of the second phase-shift circuit; the second planar antenna (A2) being electrically connected to the second polarization lines (BL2);
the second and fourth planar antennas (A2, A4) being configured to operate in the second and first passbands (B2, B1), respectively, so that the first and second planar antennas (A1, A2) are configured to operate in two different passbands (B1, B2), the third and fourth planar antennas (A3, A4) being electrically connected to the ground plane (PM).

11. Unit cell (1) according to Claim 10, comprising:
- a third dielectric substrate (S3), extending between the ground plane (PM) and the first dielectric substrate (S1), the third planar antenna (A3) extending on the third dielectric substrate (S3);
- a fourth dielectric substrate (S4), comprising a first surface (S40) on which the ground plane (PM) extends, and a second, opposed, surface (S41) on which the fourth planar antenna (A4) extends.

12. Antenna reconfigurable to an operating frequency, comprising:
- a transmitter array comprising a set of unit cells (1) according to any of Claims 6 to 11;
- first and second radiating sources, operating, respectively, in first and second passbands (B1, B2), and arranged to illuminate the transmitter array.
